# EUROPÄISCHE PATENTSCHRIFT

(11) **EP 1 358 711 B1**
(45) Veröffentlichungstag und Bekanntmachung des Hinweises auf die Patenterteilung: **26.09.2007**
(21) Anmeldenummer: 02719702.9
(22) Anmeldetag: 17.01.2002
(51) Int. Cl.: H02P 25/08, B60L 11/18

(54) **STROMRICHTERVORRICHTUNG FÜR EINE VON MEHREREN MOTORWICKLUNGEN ENIES RELUKTANZMOTORS**
POWER CONVERTER DEVICE FOR ONE OF SEVERAL MOTOR WINDINGS ON A RELUCTANCE MOTOR
DISPOSITIF CONVERTISSEUR DE PUISSANCE POUR UN DES DIVERS BOBINAGES D'UN MOTEUR A RELUCTANCE

(30) Priorität: 31.01.2001 DE 10104275
(43) Veröffentlichungstag der Anmeldung: 05.11.2003
(73) Patentinhaber: MAGNET-MOTOR GESELLSCHAFT FÜR MAGNETMOTORISCHE TECHNIK MBH, 82319 Starnberg (DE)
(72) Erfinder: BIEBACH, Jens, 82131 Gauting (DE)
(74) Vertreter: Klunker . Schmitt-Nilson . Hirsch
(86) Internationale Anmeldenummer: PCT/EP2002/000448
(87) Internationale Veröffentlichungsnummer: WO 2002/061935

(56) Entgegenhaltungen:
- EP-A- 1 063 761
- DE-C- 19 832 876
- DAHMANE M ET AL: "AN ADAPTED CONVERTER FOR SWITCHED RELUCTANCE MOTOR/GENERATOR FOR HIGH SPEED APPLICATIONS" CONFERENCE RECORD OF THE 2000 IEEE INDUSTRY APPLICATIONS CONFERENCE. 35TH IAS ANNUAL MEETING AND WORLD CONFERENCE ON INDUSTRIAL APPLICATIONS OF ELECTRICAL ENERGY. ROME, ITALY, OCT. 8 - 12, 2000, CONFERENCE RECORD OF THE IEEE INDUSTRY APPLICATIONS CON, Bd. 3 OF 5. CONF. 35, 8. Oktober 2000 (2000-10-08), Seiten 1547-1554, XP001043262 ISBN: 0-7803-6402-3

## Beschreibung

Die Erfindung betrifft eine Stromrichtervorrichtung für eine von mehreren Motorwicklungen eines geschalteten Reluktanzmotors (Switched-Reluctance-Motor).

Eine solche Stromrichtervorrichtung umfaßt eine Halbleiterschaltungsanordnung in Form eines asymmetrischen Wechselrichters, der von einer Hauptspannungsquelle, insbesondere einem Gleichspannungszwischenkreis, gespeist wird.

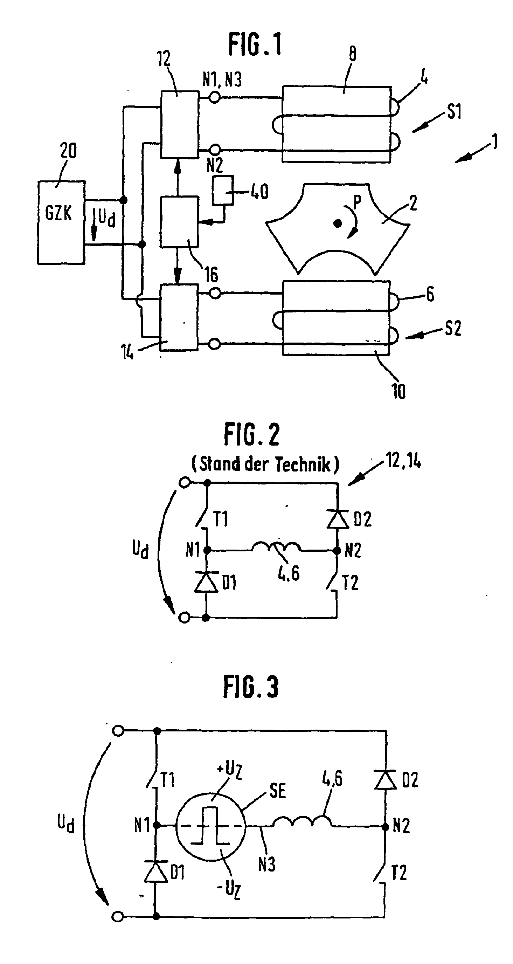

Zunächst soll anhand der Figuren 1 und 2 eine bekannte Stromrichtervorrichtung für einen geschalteten Reluktanzmotor beschrieben werden.

Gemäß Fig. 1 enthält ein Reluktanzmotor 1 einen mindestens dreipoligen Rotor 2, dem mindestens zwei Statorteile S1 und S2 zugeordnet sind. Der Statorteil S1 besteht aus einer Motorwicklung 4 und einem Kern 8, der Statorteil S2 besteht aus einer Motorwicklung 6 und einem Kern 10. Die Motorwicklungen 4 und 6 sind an Stromrichtervorrichtungen 12 bzw. 14 angeschlossen, die beide von einer Spannung U_{d} gespeist werden, die von einer hier als Gleichspannungszwischenkreis 20 gebildeten Hauptspannungsquelle geliefert wird. Eine Steuereinrichtung 16 steuert die beiden Stromrichtervorrichtungen 12 und 14.

Fig. 2 zeigt eine bekannte Stromrichtervorrichtung 12 oder 14 in Verbindung mit einer zugehörigen Motorwicklung 4 bzw. 6.

Die Stromrichtervorrichtung enthält zwei Reihenschaltungen aus jeweils einem Leistungshalbleiter T1 bzw. T2 und einer Diode D1 bzw. D2.

Die Verbindungsknoten N1 und N2 zwischen den jeweiligen Leistungshalbleitern und den Dioden bilden die Anschlüsse zwischen der jeweiligen Stromrichtervorrichtung und der zugehörigen Motorwicklung.

Bekanntlich nimmt bei einem solchen Reluktanzmotor der Gradient der Induktivitätsänderung mit steigender Drehzahl zu, weshalb bei hohen Drehzahlen, bei denen die zum Bestromen bzw. Entstromen der Motorwicklung verfügbare Zeit immer kürzer wird die gewünschte Stromamplitude nicht mehr erreicht wird. Damit reduziert sich das antreibende Moment. Außerdem wird das Abklingen des Stroms verzögert. Ist die Abklingdauer des Stroms zu groß, ergibt sich ein bremsendes Moment.

Der nächstkommenden Stand der Technik wird in dem Artikel von M. Dahmane: "An Adapted Converter for Switched Reluctance Motor/Generator for High Speed Applications", Proceedings of the 35th IEEE-conference on Industrial Applications of Electrical Energy (IAS), Rome, October 2000, angegeben.

Die in diesem Artikel beschriebene Stromrichtervorrichtung ist derart aufgebaut, dass eine zusätzliche Spannungsquelle vorgesehen ist, welche eine zusätzliche treibende Spannung verfügbar macht.

Durch die Anordnung der zusätzlichen Spannungsquelle vor dem asymetrischen Wechselrichter kann bei der Schaltung nach diesem Artikel die zusätzliche Spannungsquelle nur benutzt werden, wenn das Spannungsniveau der Hauptspannungsquelle deutlich unter der zulässigen Spannung der Halbleiterschalter gehalten wird, da sich die Spannungsbelastung der Halbleiterschalter als Summe aus Hauptspannung und Zusatzspannung ergibt. Damit werden die Halbleiterschalter im Normalbetrieb schlecht genutzt.

Der Erfindung liegt die Aufgabe zugrunde, eine Stromrichtervorrichtung der oben genannten Art anzugeben, mit der insbesondere bei höheren Drehzahlen ein im Vergleich zu bekannten Vorrichtungen verbessertes Drehmoment erreicht wird.

Diese Aufgabe wird durch die im Anspruch 1 definierte Stromrichtervorrichtung gelöst.

Der Grundgedanke der Erfindung besteht darin, das Bestromen der Motorwicklung durch eine erhöhte Spannung zu beschleunigen, damit die gewünschte Stromamplitude schneller erreicht werden kann, und/oder beim Abkommutieren mit Hilfe einer negativen Spannung den Stromabfall zu beschleunigen.

Die zusätzliche Spannungsquelle wird durch einen aus der angeschlossenen Motorwicklung gespeisten Energiespeicher gebildet. Die zusätzliche Spannungsquelle dann aus einem Kondensator, dessen Reihenschaltung bezüglich der Motorphase und der Hauptspannungsquelle durch ansteuerbare Halbleiterschalter erfolgt. Durch das direkte Anschließen der zusätzlichen Spannungsquelle an die Motorwicklung wird vermieden, daß die übrige Wechselrichterschaltung, die der bekannten Stromrichtervorrichtung entspricht, einer erhöhten Spannungs- und Strombeanspruchung ausgesetzt wird.

Der als Energiespeicher fungierende Kondensator ist zusammen mit ansteuerbaren Halbleiterschaltern an die Motorwicklung geschaltet. Die ansteuerbaren Halbleiterschalter werden von der Steuereinrichtung gemäß den Erfordernissen des jeweiligen Betriebszustandes betätigt. Außer dieser Ansteuerung der Halbleiterschalter für den zugeschalteten Kondensator sind keine weiteren Maßnahmen erforderlich. D.h., man kann die erfindungsgemäße zusätzliche Spannungsquelle mit den dazugehörigen Elementen als eigenständige, auch nachrüstbare, Schaltungserweiterung ausgestalten, die sich problemlos an bestehende Stromrichtervorrichtungen anschließen läßt, z.B. auch in Form einer Steckverbindung.

Aufgrund des eigenständigen Charakters der erfindungsgemäßen Schaltungserweiterung kann diese bedarfsweise zu- oder abgeschaltet werden. Diese Option bietet für die Praxis zahlreiche Vorteile, wie weiter unten noch ausgeführt werden wird.

Die im Anspruch 1 definierte Stromrichtervorrichtung sieht folgende Merkmale vor:
a) die Halbleiterschalteranordnung des asymmetrischen Wechselrichters besteht aus zwei Zweigen und jeder Zweig aus je einem schaltbaren Leistungshalbleiter, z. B. einem Leistungstransistor, der mit einer bezüglich des Gleichspannungszwischenkreises in Sperrichtung gepolten Diode in Reihe geschaltet ist, wobei in einem Zweig die Diode mit dem Minuspol des Gleichspannungszwischenkreises und im anderen Zweig mit dem Pluspol des Gleichspannungszwischenkreises verbunden ist;
b) zwischen den Verbindungsknoten der Elemente der zwei Reihenschaltungen liegen die Motorwicklung und die erfindungsgemäße Schaltungserweiterung, bestehend aus einem Kondensator, zwei Dioden und zwei schaltbaren Leistungshalbleitern, in der Reihe; und
c) der Kondensator wird durch Halbleiterschalter derart gepolt, daß aus ihm Energie entnommen, in ihm Energie gespeichert, oder der Ladezustand des Kondensators nicht verändert wird.

Insbesondere sieht die Erfindung vor, daß zu dem Kondensator zwei Reihenschaltungen aus je einer Diode und einem Halbleiterschalter parallelgeschaltet sind, deren Verbindungsknoten an den Verbindungsknoten eines der beiden Reihenschaltungen des asymmetrischen Wechselrichters bzw. an die Motorwicklung angeschlossen sind. Diese Elemente der erfindungsgemäßen Stromrichterschaltung bzw. der Schaltungserweiterung für eine Stromrichterschaltung lassen sich in relativ einfacher Weise als zuschaltbares oder zusteckbares Modul ausbilden.

Je nach Ansteuerung der Leistungshalbleiter des asymmetrischen Wechselrichters bzw. der dem Kondensator zugeordneten Halbleiterschalter lassen sich nun verschiedene Betriebsarten realisieren:

Eine besonders wichtige Betriebsform sieht vor, daß beim Abkommutieren des Stroms der Motorwicklung beide Halbleiterschalter der Schaltungserweiterung geöffnet werden. Der Strom fließt dann über die beiden Dioden, die an die Beläge des Kondensators angeschlossen sind, so daß der Kondensator mit entsprechender Polarität aufgeladen wird.

Die Leistungshalbleiter (Transistoren) in den beiden zueinander parallel liegenden Zweigen (Reihenschaltungen) des asymmetrischen Wechselrichters können dann in unterschiedlicher Betriebsart angesteuert werden. Von untergeordneter Bedeutung ist die Variante, daß beide Leistungshalbleiter geschlossen sind.

In einer ersten bevorzugten Betriebsart ist vorgesehen, daß beide Leistungshalbleiter des asymmetrischen Wechselrichters geöffnet sind. Dies entspricht einer "harten" Kommutierung. Der Strom wird ausschließlich über die Dioden der beiden zueinander parallelen Kreise des asymmetrischen Wechselrichters geleitet, sowohl die Spannung von der Hauptspannungsquelle als auch die sich erhöhende Spannung von der zusätzlichen Spannungsquelle sorgen für eine sehr rasche Abnahme des Phasenstroms. Am Kondensator CK entsteht eine Spannung, deren Wert abhängig ist von der Kapazität des Kondensators, der Bestromungsdauer des Kondensators und dem Wert des Phasenstroms während der Bestromung.

In einer anderen bevorzugten Variante des Betriebs ist vorgesehen, daß beim Abkommutieren des Stroms der Motorwicklung ein Leistungshalbleiter des asymmetrischen Wechselrichters geschlossen ist (während der andere geöffnet ist). Hierdurch wird ein "weiches" Abkommutieren erreicht; denn entweder fließt der Strom über die Diode in der einen Reihenschaltung oder durch die Diode der anderen Reihenschaltung, in jedem Fall erfolgt das Abkommutieren nicht über die Hauptspannungsquelle.

Sind beide Leistungshalbleiter in den beiden Reihenschaltungen geschlossen, ergibt sich eine Kondensatorspannung, die maximal den Wert der Zwischenkreisspannung erreicht. Diese Betriebsweise ist von untergeordneter Bedeutung.

In einer speziellen Variante beim Betrieb der erfindungsgemäßen Stromrichtervorrichtung kann einer der dem Kondensator zugeordneten Halbleiterschalter geschlossen sein (der andere ist geöffnet). Hierdurch läßt sich die Spannung am Kondensator auf einen gewünschten Wert begrenzen, der unter dem maximal zulässigen Spannungswert liegt.

Beim Bestromen der Motorwicklung werden zur raschen Erreichung der maximalen Stromamplitude die beiden dem Kondensator zugeordneten Halbleiterschalter geschlossen, außerdem werden die in den beiden Zweigen des asymmetrischen Wechselrichters befindlichen Leistungshalbleiter durchgeschaltet, so daß der Strom durch die erhöhte summierte Spannung rasch in die Motorwicklung eingeprägt wird. Nachdem die Spannung des Kondensators der Schaltungserweiterung auf Null abgefallen ist, fließt der Strom durch die beiden zu den jeweiligen Belägen des Kondensators parallelgeschalteten Reihenschaltungen aus jeweils einer Diode und einem Halbleiterschalter.

Die oben geschilderten Betriebszustände der erfindungsgemäßen Stromrichtervomichtung lassen sich mit den üblichen Betriebszuständen in der Weise kombinieren, daß eine Annäherung an einen vorgegebenen Drehmomentverlauf, eine Minimierung von Geräuschen und/oder eine Minimierung bzw. eine Gleichverteilung von Schaltverlusten erreicht wird. Ein Betriebszyklus umfaßt das Einprägen des Stroms in die Motorwicklung mit oder ohne Zusatzspannung aus der zusätzlichen Spannungsquelle, ein weiches Abkommutieren, wiederum mit oder ohne Zusatzspannung, und ein hartes Abkommutieren jeweils mit oder ohne Zusatzspannung.

Die Erfindung umfaßt nicht nur die separate Stromrichtervorrichtung für einen Reluktanzmotor, sondern auch einen Reluktanzmotor mit einer solchen Stromrichtervorrichtung. Bevorzugt wird ein derartiger Reluktanzmotor mit Stromrichtervorrichtung bei einem Fahrzeug mit elektrischem Antrieb eingesetzt, wobei der Antrieb einen oder mehrere solche Reluktanzmotoren umfaßt.

In einer bevorzugten Ausführungsform ist eine Zuschaltvorrichtung vorgesehen, mit der die Stromrichtervorrichtung zwischen die Hauptspannungsquelle und die Motorwicklung zugeschaltet werden kann. Diese Zuschaltvorrichtung kann auch automatisch ausgelöst werden, beispielsweise bei einem Fahrzeug abhängig von der Geschwindigkeit, d.h. bei einem mit einem Reluktanzmotor angetriebenen Fahrzeug abhängig von der Drehzahl. Da - wie gesagt - die hier in Rede stehenden Reluktanzmotoren bei höheren Drehzahlen einen ungünstigen Drehmomentverlauf haben, kann bei einer vorgegebenen Drehzahl die Schaltungserweiterung der Stromrichtervorrichtung zugeschaltet werden, damit ein über den gesamten Drehzahlbereich günstiger Drehmomentverlauf erreicht wird.

Im folgenden werden Ausführungsbeispiele der Erfindung anhand der Zeichnung näher erläutert. Es zeigen:
- Fig. 1: eine schematische Skizze eines geschalteten Reluktanzmotors mit Stromrichtervorrichtung, wobei aus der Figur sowohl die übliche Anordnung und Ausgestaltung eines Reluktanzmotors als auch die erfindungsgemäße Weiterbildung hervorgeht;
- Fig. 2: eine Skizze einer herkömmlichen Stromrichtervorrichtung für einen Reluktanzmotor der in Fig. 1 gezeigten Art;
- Fig.3: eine schematische Ansicht einer erfindungsgemäßen Stromrichtervorrichtung, die sich von der in Fig. 2 gezeigten bekannten Stromrichtervorrichtung durch eine Schaltungserweiterung SE auszeichnet;
- Figuren: 4 und 5 schematische Darstellungen einer Stromrichtervorrichtung in den Betriebszuständen "Bestromen" bzw. "Abkommutieren";
- Fig. 6: eine schematische Darstellung einer speziellen Ausführungsform einer erfindungsgemäßen Stromrichtervorrichtung;
- Figuren: 7, 8 und 9 jeweils schematisch eine erfindungsgemäße Stromrichtervorrichtung in einem gegebenen Betriebszustand.

Fig. 1 zeigt schematisch einen geschalteten Reluktanzmotor 1 mit einem drei Polschenkel aufweisenden Reluktanzmotor 2 und einem zwei Statorteile S1 und S2 aufweisenden Stator. Entsprechend der Bestromung der beiden Statorteile S1 und S2 dreht sich der Rotor 2 in Pfeilrichtung P.

Der Statorteil S1 enthält eine Motorwicklung 4 mit einem Kern 8, der Statorteil S2 enthält eine Motorwicklung 6 mit einem Kern 10.

Die beiden Motorwicklungen 4 und 6 werden von Stromrichtervorrichtungen 12 bzw. 14 gespeist. Für die Motorwicklung 4 sind die Verbindungsknoten mit der Stromrichtervorrichtung 12 mit N1 und N2 bezeichnet. Die beiden Stromrichtervorrichtungen 11 und 12 werden von einer hier als Gleichspannungszwischenkreis ausgebildeten Hauptspannungsquelle 20 mit einer Spannung U_{d} gespeist. Eine Steuereinrichtung 16 steuert die in den beiden identisch ausgebildeten, jedoch zeitversetzt angesteuerten Stromrichtervorrichtungen 11 und 14 befindlichen schaltenden Leistungshalbleiter.

Im folgenden wird jeweils nur eine Stromrichtervorrichtung stellvertretend für die beiden Stromrichtervorrichtungen 12 und 14 beschrieben.

Fig. 2 zeigt schematisch den Aufbau einer in Form eines asymmetrischen Wechselrichters aufgebauten Stromrichtervorrichtung 12 oder 14. Parallel zu der aus der Hauptspannungsquelle 20 kommenden Spannung U_{d} liegen zwei Reihenschaltungen, jeweils bestehend aus einem schaltbaren Leistungshalbleiter (Leistungstransistoren) T1, T2 und einer Diode D1, D2.

Durch zeitrichtige Ansteuerung der Leistungshalbleiter T1 und T2, d.h. durch zeitrichtiges Schließen und Öffnen der beiden "Schalter" T1 und T2 wird die Motorwicklung 4 bzw. 6 bestromt bzw. der Strom wird abkommutiert.

Fig. 3 veranschaulicht schematisch die erfindungsgemäße Idee, nämlich eine Schaltungserweiterung SE zwischen die Motorwicklung und den Verbindungsknoten N1 der aus dem Leistungshalbleiter T1 und der Diode D1 bestehenden Reihenschaltung zu legen. Die Schaltungserweiterung SE liefert eine zusätzliche treibende Spannung zum Bestromen der Motorwicklung, + U_{z} bzw. eine die Abkommutierung des Spulenstroms beschleunigende Spannung - U_{z}.

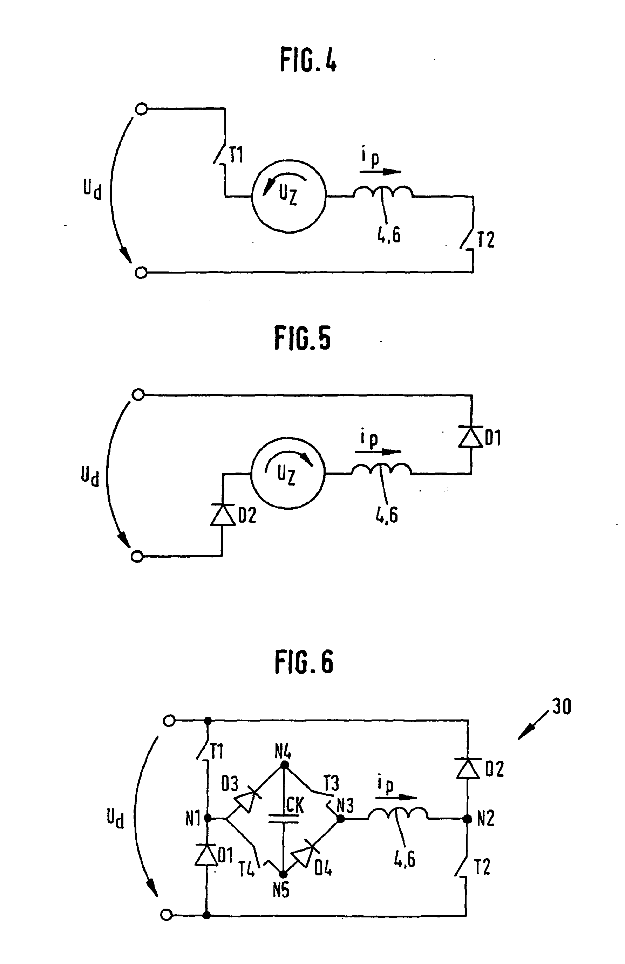

Fig. 4 zeigt schematisch das Bestromen der Motorwicklung 4 oder 6. Der die Motorwicklung durchfließende Strom iₚ wird durch die zusätzliche Spannung U_{z}, die der Spannung U_{d} der Häuptspannungsquelle additiv überlagert ist, erhöht, so daß die gewünschte große Stromamplitude rasch erreicht wird.

Gemäß Fig. 5 erfolgt das Abkommutieren des Spulenstroms iₚ durch Öffnen der beiden Leistungshalbleiter-Schalter T1 und T2, demzufolge der Strom durch die beiden Dioden D1 und D2 fließt. Durch die jetzt gegenüber Fig. 4 entgegengesetzte Polarität aufweisende Spannung U_{z} wird das Abkommutieren des Spulenstroms bschleunigt.

Fig. 6 zeigt eine Ausführungsform für die zusätzliche Spannungsquelle, die zwischen den Verbindungsknoten N1 zwischen den beiden Bauelementen T1 und D1 und die Motorwicklung gelegt ist. Zwei zueinander parallel geschaltete Reihenschaltungen aus jeweils einer Diode D3 bzw. D4 und einem Halbleiterschalter T3 bzw. T4 sind mit jeweils einem Belag eines Kondensators CK verbunden. Die Verbindungsknoten zwischen den beiden Halbleiterschaltern T3 bzw. T4 und den Dioden D3 bzw. D4 sind mit N4 bzw. N5 bezeichnet.

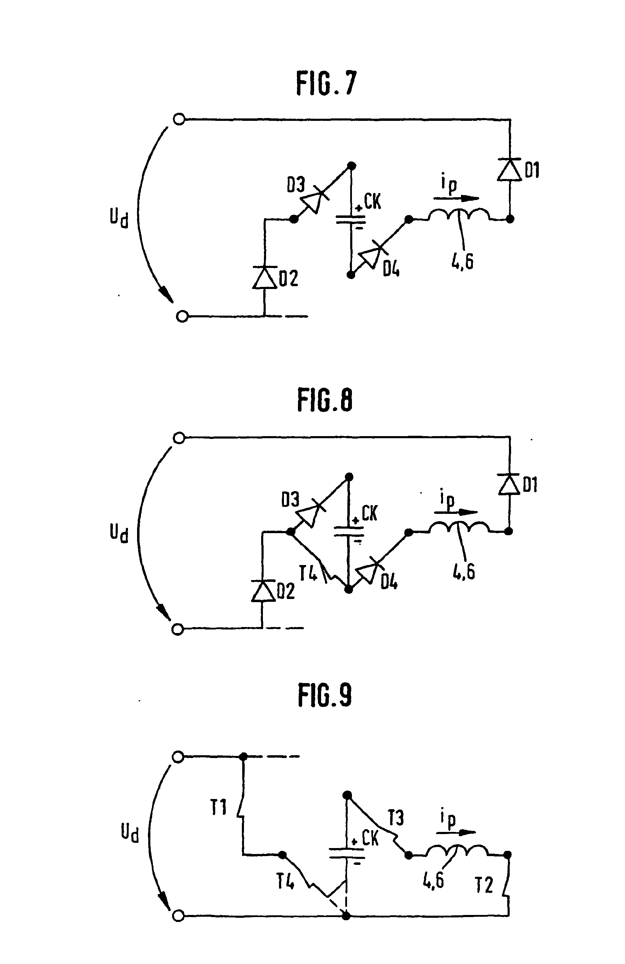

Im folgenden sollen verschiedene mögliche Betriebszustände der Stromrichtervorrichtung anhand der Figuren 7 bis 9 näher erläutert werden. Die verschiedenen Betriebszustände umfassen das Bestromen und das Abkommutieren des Stroms für die Motorwicklung 4 bzw. 6. Zur Unterstützung des Bestromens bzw. zur Beschleunigung der Erreichung der maximalen Stromamplitude in der Motorwicklung werden die beiden Halbleiterschalter T3 und T4 geschlossen, nachdem zuvor der Kondensator CK aufgeladen wurde. Zum beschleunigten Abkommutieren des Stroms aus der Motorwicklung werden die beiden Halbleiterschalter T3 und T4 geöffnet, wie dies in Fig. 6 dargestellt ist.

Sind die beiden Leistungshalbleiter T1 und T2 geschlossen, während T3 und T4 geöffnet sind, kann der Kondensator solange geladen werden, bis der Strom der Motorwicklung auf Null geht. Die Zusatzspannung ist dann gleich der Zwischenkreisspannung. Diese Betriebsweise ist in der Praxis von untergeordneter Bedeutung.

Zur "weichen" Abkommutierung des Stroms der Motorwicklung wird T1 oder T2 geöffnet. Dementsprechend fließt der Strom über D1 oder D2. Das Abkommutieren findet nicht über den Gleichspannungszwischenkreis statt. Am Kondensator CK baut sich eine Spannung auf. Der maximale Spannungswert hängt ab von der Kapazität des Kondensators, der Bestromungsdauer und dem Verlauf des Stroms während der Bestromung. Es ist dafür Sorge zu tragen, daß der Kondensator CK nur so lange geladen wird, wie seine maximal zulässige Spannung bzw. die zulässige Spannung der angeschlossenen Leistungshalbleiter D3, D4, T3, T4 nicht überschritten wird. Alternativ besteht auch die Möglichkeit, die Spannungsklasse und/oder die Kapazität des Kondensators bzw. die Spannungsklasse der angeschlossenen Leistungshalbleiter anzupassen.

Ein "hartes" Abkommutieren des Stroms der Motorwicklung erfolgt durch Öffnen von T1 und T2. In diesem Zustand fließt der Strom ausschließlich über die Dioden, wie in Fig. 7 dargestellt ist (vgl. auch Fig. 5). Das Abkommutieren des Stroms wird verstärkt durch die zusätzliche Spannung, die durch den Kondensator CK bereitgestellt wird. Der Energiefluß erfolgt sowohl in den Gleichspannungszwischenkreis als auch in den Kondensator CK. Bezüglich der Spannung des Kondensators gilt das gleiche wie im vorausgegangenen Punkt.

Man kann den Wert der Spannung am Kondensator CK konstanthalten, indem man einen der beiden Halbleiterschalter (Transistoren) T3 und T4 schließt, wie dies für den Halbleiterschalter T4 in Fig. 8 dargestellt ist.

Zum Beschleunigen, d.h. zum zusätzlichen Treiben des Stroms in der Motorwicklung entsprechend der schematischen Darstellung in Fig. 4 werden die beiden Halbleiterschalter T3 und T4 sowie die beiden Leistungshalbleiter T1 und T2 (sämtliche Elemente T1, T2, T3 und T4 können gleiche Bauelementtypen sein) geschlossen. Die Spannung des Kondensators CK, dessen an N4 liegender Anschluß durch die vorausgegangene Ladung positive Polarität hat, addiert sich zu der Spannung U_{d}. Beim Bestromen der Motorwicklung nimmt die Kondensatorspannung an CK ab. Bei etwa der Spannung null fließt der Strom dann vom Knoten N1 (Fig. 6) über die beiden Reihenschaltungen D3, T3 bzw. T4, D4 zum Knoten N3 der Motorwicklung 4 bzw. 6.

Die oben erläuterten Betriebszustände mit und ohne Einsatz der zusätzlichen, durch den Kondensator CK gebildeten Spannungsquelle läßt sich in jeweils gewünschter Weise durch entsprechende Ansteuerung der Leistungshalbleiter T1 und T2 bzw. der Halbleiterschalter T3 und T4 so steuern, daß ein gewünschter Motorbetrieb erreicht wird, also z.B. ein bestimmter Drehmomentverlauf, Minimierung der Geräuschentwicklung beim Motorbetrieb oder optimale Verteilung der Schaltverluste auf die einzelnen Halbleiterschalter bzw. Leistungshalbleiter.

Das Ansteuern der beiden dem Kondensator zugeordneten Halbleiterschalter T3 und T4 erfolgt durch die in Fig. 1 gezeigte Steuereinrichtung 16, abgestimmt auf das Ansteuern der Leistungshalbleiter T1 und T2. Die Steuereinrichtung 16 steuert die Halbleiterschalter T3 und T4 synchron bezüglich der Leistungshalbleiter T1 und T2, und zwar phasenversetzt für die beiden Stromrichtervorrichtungen 12 und 14 des Reluktanzmotors.

Ein solcher Reluktanzmotor läßt sich vorteilhafterweise in einem elektrisch betriebenen Fahrzeug einsetzen, in welchem z.B. jedem angetriebenem Rad ein eigener Reluktanzmotor zugeordnet ist. Um die Drehmomentverschlechterung bei hohen Drehzahlen zu vermeiden, kann man dann die in Fig. 3 schematisch dargestellte Schaltungserweiterung SE, gemäß Fig. 6 bestehend aus der Schaltung zwischen den Knoten N1 und N3, der "konventionellen" Stromrichtervorrichtung 12 bzw. 14 zuschalten, was oben in Fig. 1 durch den Knoten N3 der Motorwicklung 4 angedeutet ist. Dieses Zuschalten kann von Hand über eine Zuschaltvorrichtung 40 erfolgen. Diese Zuschaltvorrichtung 40 kann auch automatisch drehzahlabhängig aktiviert werden.

## Patentansprüche

1. Stromrichtervorrichtung für eine von mehreren Motorwicklungen (4, 6) eines Reluktanzmotors, umfassend eine Halbleiterschaltungsanordnung (30) in Form eines asymmetrischen Wechselrichters (T1, D1, T2, D2), der von einer Hauptspannungsquelle (20), insbesondere einem Gleichspannungszwischenkreis, gespeist wird, wobei die Halbleiterschaltungsanordnung (30) des asymmetrischen Wechselrichters zwei Reihenschaltungen aus je einem schaltbaren Leistungshalbleiter (T1, T2) und einer Diode (D1, D2), die beide zu der Hauptspannungsquelle (20) parallelgeschaltet sind, enthält, und wobei eine zusätzliche Spannungsquelle (SE; CK) veränderlicher Polarität vorgesehen ist, welche durch einen Kondensator (CK) gebildet wird, und wobei eine Steuereinrichtung (16) vorgesehen ist, die, abgestimmt auf den Betrieb des Wechselrichters,
• beim Bestromen der Motorwicklung (4,6) seitens der zusätzlichen Spannungsquelle (SE; CK) eine zusätzliche positive treibende Spannung verfügbar macht; und
• bei Bedarf die zusätzliche Spannungsquelle (SE; CK) unwirksam macht;
**dadurch gekennzeichnet, dass**
die zusätzliche Spannungsquelle (SE; CK) zu der Motorwicklung (4, 6) in Reihe durch ansteuerbare Halbleiterschalter (T3, T4) geschaltet ist,
die Steuereinrichtung (16) das Abkommutieren des Stroms aus der Motorwicklung (4,6) durch eine zusätzliche negative Spannung aus der zusätzlichen Spannungsquelle (SE; CK) unterstützt, und
der Kondensator (CK) durch die Halbleiterschalter (T3, T4) und die Leistungshalbleiter (T1, T2) derart geschaltet wird, dass aus ihm Energie entnommen, in ihm Energie gespeichert oder seine Ladung nicht verändert wird.

2. Stromrichtervorrichtung nach Anspruch 1,
**dadurch gekennzeichnet, daß**
an die Beläge des Kondensators (CK) zwei Reihenschaltungen aus je einer Diode (D3, D4) und einem Halbleiterschalter (T3, T4) angeschlossen sind, deren Verbindungsknoten (N1, N3) an den Verbindungsknoten (N1, N2) einer der beiden Reihenschaltungen (T1, D1; T2, D2) des asymmetrischen Wechselrichters bzw. an die Motorwicklung (4, 6) angeschlossen sind.

3. Stromrichtervorrichtung nach Anspruch 2,
**dadurch gekennzeichnet, daß**
beim Abkommutieren des Stroms der Motorwicklung (4, 6) beide Halbleiterschalter (T3, T4) geöffnet werden.

4. Stromrichtervorrichtung nach Anspruch 3,
**dadurch gekennzeichnet, daß**
beim Abkommutieren des Stromes der Motorwicklung beide Leistungshalbleiterschalter (T1, T2) des asymmetrischen Wechselrichters geöffnet werden.

5. Stromrichtervorrichtung nach Anspruch 3,
**dadurch gekennzeichnet, daß**
beim Abkommutieren des Stroms der Motorwicklung (4, 6) einer der Leistungshalbleiter (T1, T2) geschlossen ist.

6. Stromrichtervorrichtung nach Anspruch 2,
**dadurch gekennzeichnet, daß**
einer der dem Kondensator zugeordneten Halbleiterschalter geschlossen ist, damit die Ladung des Kondensators nicht verändert wird.

7. Stromrichtervorrichtung nach einem der Ansprüche 2 bis 5,
**dadurch gekennzeichnet, daß**
die dem Kondensator zugeordneten Halbleiterschalter (T3, T4) beide geschlossen sind.

8. Stromrichtervorrichtung nach Anspruch 1 oder 2,
**dadurch gekennzeichnet, daß**
die Reihenfolge der Betriebszustände Bestromung mit/ohne zusätzliche treibende Spannung, weiches Abkommutieren mit/ohne zusätzliche bremsende Spannung und hartes Abkommutieren mit/ohne zusätzliche bremsende Sapnnung derart von der Steuereinrichtung gesteuert wird, daß ein vorgegebenes Betriebsverhalten des Motors erreicht wird.

9. Reluktanzmotor mit mindestens einer Stromrichtervorrichtung nach einem der Ansprüche 1 bis 8.

10. Fahrzeug mit elektrischem Antrieb in Form eines oder mehrerer Reluktanzmotoren nach Anspruch 9.

11. Fahrzeug nach Anspruch 10,
**gekennzeichnet durch**
eine Zuschaltvorrichtung (40), mit der die Stromrichtervorrichtung (12, 14) zwischen die Hauptspannungsquelle (20) und die Motorwicklung (4, 6) zugeschaltet werden kann.

12. Fahrzeug nach Anspruch 11,
**dadurch gekennzeichnet, daß**
die Zuschaltvorrichtung (40) automatisch bei einer vorbestimmten Drehzahl betätigt wird.

## Claims

1. A power converter apparatus for one of two or more motor windings (4, 6) on a reluctance motor, comprising a semiconductor circuit arrangement (30) in the form of an asymmetric inverter (T1, D1, T2, D2) which is fed from a main voltage source (20), in particular a DC voltage intermediate circuit, the semiconductor circuit arrangement (30) of the asymmetric inverter containing two series circuits each formed by a switchable power semiconductor (T1, T2) and a diode (D1, D2), which are both connected in parallel with the main voltage source (20), an additional voltage source (SE; CK) with a variable polarity, in the form of a capacitor (CK), being provided, and a control device (16) being provided, which, matched to the operation of the inverter,
• provides an additional positive driving voltage from the additional voltage source (SE; CK) when current is flowing through the motor winding (4, 6); and
• when required, makes the additional voltage source inoperative,
**characterized in that**,
the additional voltage source (SE; CK) is connected in series with the motor winding (4, 6) by means of controllable semiconductor switches (T3, T4),
the control device (16) assists the off-commutation of the current from the motor winding (4, 6) by means of an additional negative voltage from the additional voltage source (SE; CK), and
the capacitor is connected by means of the semiconductor switches (T3, T4) and the power semiconductors (T1, T2) such that energy is drawn from it, energy is stored in it, or its charge is not changed.

2. The power converter apparatus as claimed in claim 1,
**characterized in that**
two series circuits, each comprising a diode (D3, D4) and a semiconductor switch (T3, T4), are connected to the plates of the capacitor (CK) and their connecting nodes (N1, N3) are connected to the connecting nodes (N1, N2) of one of the two series circuits (T1, D1; T2, D2) of the asymmetric inverter and, respectively, to the motor winding (4, 6).

3. The power converter apparatus as claimed in claim 2,
**characterized in that**
both semiconductor switches (T3, T4) are open during the off-commutation of the current from the motor winding (4, 6).

4. The power converter apparatus as claimed in claim 3,
**characterized in that**
both power semiconductor switches (T1, T2) of the asymmetric inverter are open during the off-commutation of the current from the motor winding.

5. The power converter apparatus as claimed in claim 3,
**characterized in that**
one of the power semiconductors (T1, T2) is closed during the off-commutation of the current from the motor winding (4, 6).

6. The power converter apparatus as claimed in claim 2,
**characterized in that**
one of the semiconductor switches which are associated with the capacitor is closed, in order that the charge on the capacitor does not change.

7. The power converter apparatus as claimed in one of claims 2 to 5,
**characterized in that**
the semiconductor switches (T3, T4) which are associated with the capacitor are both closed.

8. The power converter apparatus as claimed in claim 1 or claim 2,
**characterized in that**
the sequence of the operating states current flow with/without an additional driving voltage, soft off-commutation with/without an additional braking voltage and hard off-commutation with/without additional braking voltage are controlled by the control device such that a predetermined operating behavior is achieved for the motor.

9. A reluctance motor having at least one power converter apparatus as claimed in any one of claims 1 to 8.

10. A vehicle having an electrical drive in the form of one or more reluctance motors as claimed in claim 9.

11. The vehicle as claimed in claim 10,
**characterized by**
a connection apparatus (40), by means of which the power converter apparatus (12, 14) can be connected between the main voltage source (20) and the motor winding (4, 6).

12. The vehicle as claimed in claim 11,
**characterized in that**
the connection apparatus (40) is operated automatically at a predetermined motor speed.

## Revendications

1. Dispositif de conversion pour l'une d'une pluralité de bobines de moteur (4, 6) d'un moteur à réluctance, comprenant un circuit de commutation de semi-conducteur (30) sous la forme d'un onduleur asymétrique (T1, D1, T2, D2) qui est alimenté par une source de tension principale (20), en particulier un circuit intermédiaire de tension continue, où le circuit de semi-conducteur (30) de l'onduleur asymétrique comprend deux couplages en série constitués chacun d'un semi-conducteur de puissance commutable (T1, T2) et d'une diode (D1, D2) qui sont tous deux couplés en parallèle par rapport à la source de tension principale (20), une source de tension supplémentaire (SE ; CK) de polarité variable étant prévu qui est formée par un condensateur (CK), et un dispositif de commande (16) étant prévu qui, selon le fonctionnement de l'onduleur :
- met à disposition une tension de propulsion positive supplémentaire en cas d'alimentation de la bobine de moteur (4, 6) du côté de la source de tension supplémentaire (SE ; CK) ;
- désactive la source de tension supplémentaire (SE ; CK) en cas de besoin ;
**caractérisé en ce que** :
- la source de tension supplémentaire (SE ; CK) est couplée en série par rapport à la bobine de moteur (4, 6) par le biais de commutateurs de semi-conducteurs excitables (T3,T4);
- le dispositif de commande (16) soutient la commutation à l'arrêt du courant issu de la bobine du moteur (4, 6) par le biais d'une tension négative supplémentaire issue de la source de tension supplémentaire (SE ; CK) ; et
- le condensateur (CK) est commuté par le biais des commutateurs de semi-conducteurs (T3, T4) et des semi-conducteurs de puissance (T1, T2) de telle sorte que de l'énergie est prélevée de celui-ci, de l'énergie est stockée dans celui-ci ou sa charge n'est pas modifiée.

2. Dispositif de conversion selon la revendication 1, **caractérisé en ce que** sur les armatures du condensateur (CK) sont raccordés deux couplages en série constitués chacun d'une diode (D3, D4) et d'un commutateur de semi-conducteur (T3, T4), dont les noeuds de jonction (N1, N3) sont raccordés aux noeuds de jonction (N1, N2) de l'un des deux couplages en série (T1, D1; T2, D2) de l'onduleur asymétrique ou à la bobine de moteur (4, 6) respectivement.

3. Dispositif de conversion selon la revendication 2, **caractérisé en ce que**, lors de la commutation à l'arrêt du courant de la bobine de moteur (4, 6), les deux commutateurs de semi-conducteurs (T3, T4) sont ouverts.

4. Dispositif de conversion selon la revendication 3, **caractérisé en ce que**, lors de la commutation à l'arrêt du courant de la bobine de moteur, les deux commutateurs de semi-conducteurs de puissance (T1, T2) de l'onduleur asymétrique sont ouverts.

5. Dispositif de conversion selon la revendication 3, **caractérisé en ce que**, lors de la commutation à l'arrêt du courant de la bobine de moteur (4, 6), l'un des semi-conducteurs de puissance (T1, T2) est fermé.

6. Dispositif de conversion selon la revendication 2, **caractérisé en ce que** l'un des commutateurs de semi-conducteurs adjoints au condensateur est fermé afin que la charge du condensateur ne soit pas modifiée.

7. Dispositif de conversion selon l'une des revendications 2 à 5, **caractérisé en ce que** les commutateurs de semi-conducteurs (T3, T4) adjoints au condensateur sont fermés tous les deux.

8. Dispositif de conversion selon la revendication 1 ou 2, **caractérisé en ce que** la succession des états de fonctionnement Alimentation avec/sans tension de propulsion supplémentaire, Commutation à l'arrêt douce avec/sans tension de freinage supplémentaire et Commutation à l'arrêt dure avec/sans tension de freinage supplémentaire est commandée par le dispositif de commande de telle sorte qu'un régime prédéterminé du moteur est atteint.

9. Moteur à réluctance comportant au moins un dispositif de conversion selon l'une des revendications 1 à 8.

10. Véhicule comportant un entraînement électrique sous la forme d'un ou de plusieurs moteurs à réluctance selon la revendication 9.

11. Véhicule selon la revendication 10, **caractérisé par** un dispositif de mise en circuit (40) avec lequel le dispositif de conversion (12, 14) peut être mis en circuit entre la source de tension principale (20) et la bobine de moteur (4, 6).

12. Véhicule selon la revendication 11, **caractérisé en ce que** le dispositif de mise en circuit (40) est activé automatiquement à une vitesse de rotation prédéterminée.
